# FASCICULE DE BREVET EUROPEEN

(11) **EP 1 157 392 B1**
(45) Date de publication et mention de la délivrance du brevet: **18.01.2006**
(21) Numéro de dépôt: 00909406.1
(22) Date de dépôt: 02.03.2000
(51) Int. Cl.: G21C 7/24

(54) **PROCEDE DE FABRICATION D'UN MATERIAU ABSORBANT NEUTRONIQUE A BASE DE CARBURE DE BORE ET DE HAFNIUM ET MATERIAU ABSORBANT NEUTRONIQUE OBTENU PAR CE PROCEDE**
VERFAHREN ZUR ERZEUGUNG EINES BORKARBID- UND HAFNIUM-HALTIGEN NEUTRONENABSORBIERENDEN MATERIALS UND DURCH DIESES VERFAHREN ERHALTENES NEUTRONENABSORBIERENDES MATERIAL
METHOD FOR MANUFACTURING A NEUTRON ABSORBER MATERIAL BASED ON BORON CARBIDE AND HAFNIUM AND NEUTRON ABSORBER MATERIAL OBTAINED BY THE SAME

(30) Priorité: 03.03.1999 FR 9902631
(43) Date de publication de la demande: 28.11.2001
(73) Titulaire: COMMISSARIAT A L'ENERGIE ATOMIQUE, 75752 Paris Cédex 15 (FR)
(72) Inventeur: Provot, Bruno, F-69003 Lyon (FR); Deschanels, Xavier, Palus, 30290 Saint Victor La Coste (FR); Bry, Philippe, F-91120 Palaiseau (FR)
(74) Mandataire: Audier, Philippe André
(86) Numéro de dépôt international: PCT/FR2000/000521
(87) Numéro de publication internationale: WO 2000/052704

(56) Documents cités:
- EP-A- 0 087 926
- EP-A- 0 087 927
- EP-A- 0 359 683
- WO-A-94/28556
- DATABASE WPI Week 9102 Derwent Publications Ltd., London, GB; AN 91-012861 XP002117280 & SE 8 901 091 A (ABB ATOM AB), 30 septembre 1990 (1990-09-30)
- DATABASE WPI Week 8805 Derwent Publications Ltd., London, GB; AN 88-031544 XP002117281 & JP 62 289792 A (TOSHIBA KK), 16 décembre 1987 (1987-12-16)
- DATABASE WPI Week 8740 Derwent Publications Ltd., London, GB; AN 87-280513 XP002117282 & JP 62 194497 A (NIPPON KAKU NENRYO), 26 août 1987 (1987-08-26)

## Description

### Domaine technique

L'invention se rapporte à un matériau absorbant neutronique composite et à un procédé de fabrication de ce matériau.

Les matériaux absorbants neutroniques sont des absorbeurs de neutrons. Ils trouvent par exemple une application dans la fabrication des barres de contrôle qui interviennent dans le contrôle de réactivité des réacteurs nucléaires, notamment dans le contrôle des réacteurs nucléaires à eau pressurisée (REP) et des réacteurs à neutrons rapides (RNR).

Dans les coeurs des réacteurs nucléaires, les matériaux absorbants neutroniques sont d'indispensables composants des barres de commandes. Ces dernières constituent les systèmes de contrôle, de régulation et d'arrêt de la réactivité des réacteurs.

Les matériaux qui composent ces barres de commande contiennent des nucléides capables d'absorber les neutrons afin de réduire le flux neutronique du réacteur.

Ces matériaux absorbant les neutrons peuvent être utilisés par exemple dans les deux principaux types de réacteurs nucléaires français : les Réacteurs à Eau Sous Pression et les Réacteurs à Neutrons Rapides.

Le premier choix que le concepteur du coeur est amené à faire est celui du nucléide absorbeur de neutrons à mettre en oeuvre. Il doit répondre à des besoins d'anti-réactivité liés au dimensionnement énergétique du coeur : type de combustible et d'assemblage combustible, flux neutronique recherché, puissance de la centrale, etc... En fonction de la puissance recherchée dans le coeur, de l'intensité du flux neutronique, il est indispensable d'apporter l'antiréactivité nécessaire à la régulation normale de ce flux neutronique ou éventuellement à l'arrêt d'urgence des réactions de fissions nucléaires. En effet, lors de la fission d'un noyau lourd dans le coeur d'un réacteur nucléaire, quelques neutrons sont émis à l'état libre. Si parmi les neutrons émis certains ont une chance de rencontrer un noyau fissile et d'en provoquer la fission, ils génèrent à leur tour des descendants qui, eux-mêmes, peuvent provoquer la fission d'un autre noyau et donner naissance, de génération en génération, à une réaction en chaîne. Il apparaît donc important de contrôler la quantité de neutrons libres formés afin d'éviter que la réaction de fission ne s'emballe, et de maintenir cette fission dans un état critique, c'est-à-dire en équilibre.

Ainsi, les barres de contrôle comprenant les matériaux absorbants neutroniques sont des barres mobiles montées dans le coeur de réacteurs nucléaires de manière à pouvoir coulisser entre les assemblages de combustibles, ou dans un réseau de crayons combustibles d'un assemblage. Le contrôle de la fission du coeur se fait par l'insertion ou le retrait de ces barres du coeur du réacteur nucléaire par coulissement.

Les matériaux absorbants peuvent être utiles pour maintenir la fission nucléaire à l'état critique, ils constituent alors des barres de pilotage. Ils peuvent aussi être utiles pour assurer un arrêt rapide de la réaction en chaîne, ils constituent alors des barres de sécurité.

D'autres critères peuvent être pris en compte dans le choix du matériau absorbant. Ces critères sont :
■ de bonnes caractéristiques mécaniques, notamment un module d'Young le plus faible possible, une contrainte à rupture modérée, une bonne résistance à l'endommagement mécanique et plus particulièrement une bonne résistance à la propagation des fissures,
■ un coût total raisonnable (matière première et fabrication),
■ une bonne tenue chimique et dimensionnelle sous irradiation,
■ le cas échéant, une compatibilité chimique avec la gaine (en général en acier inoxydable) qui peut être utilisée pour recouvrir l'absorbant.

Un nombre important de travaux ont été menés sur le carbure de bore B₄C dans la seule optique de son utilisation en tant qu'absorbant neutronique du fait de son importante section efficace de capture neutronique. Le matériau absorbant B₄C est utilisé sous forme d'empilements de pastilles cylindriques frittées, élaborées à partir de poudres.

Bien que présentant une grande inertie chimique, le B₄C s'oxyde facilement à partir de 600°C en présence d'oxygène. Ce composé est également sensible à la corrosion à l'eau du milieu primaire REP, notamment lorsqu'il a été irradié par les neutrons ou lorsqu'il est soumis à une irradiation par des neutrons. C'est une raison pour laquelle il est introduit généralement dans des gaines en acier inoxydable.

Par ailleurs, la durée de vie du carbure de bore n'atteint jamais la limite théorique fixée par l'épuisement du bore en raison d'un endommagement du matériau provoqué par la grande quantité d'hélium et de lithium formé par l'absorption neutronique ¹⁰B(n,α), Li. Ainsi, sous l'action de la température, une fraction de l'hélium formé diffuse hors du matériau tandis que l'autre s'y accumule, provoquant un gonflement et une microfracturation du matériau.

Dans le cas particulier des réacteurs à neutrons rapides, le flux des neutrons (énergie supérieure à 1 MeV) pénètre l'ensemble du matériau absorbant ce qui provoque un dégagement volumique de chaleur alors que la surface de l'absorbant est refroidie directement par du sodium. Il apparaît alors dans le matériau un important gradient thermique radial qui peut atteindre plusieurs centaines de degrés par centimètre. Ce gradient thermique implique dans le matériau des contraintes thermiques tangentielles majeures qui provoquent une fissuration radiale critique et la fragmentation complète du matériau absorbant.

Dans le cas particulier des réacteurs à eau pressurisée, le flux des neutrons (énergie inférieure à quelques eV) pénètre la seule périphérie du matériau absorbant. Le gonflement décrit précédemment n'intervient donc plus que dans une couronne périphérique de l'absorbant. Il apparaît alors un gonflement différentiel entre la périphérie et le coeur des pastilles d'absorbants qui implique des contraintes radiales majeures, une fissuration tangentielle critique qui se superpose à la microfracturation décrite précédemment et la fragmentation complète du matériau absorbant.

La combinaison du gonflement, de la microfracturation et de la fissuration du matériau peut provoquer pour de fortes irradiations, une interaction mécanique entre le matériau absorbant et la gaine en acier pouvant entraîner la rupture de cette dernière, la gaine étant elle-même fragilisée par l'irradiation aux neutrons rapides d'une part et par la diffusion d'une certaine quantité de bore et de carbone en provenance du matériau absorbant d'autre part.

Ces deux modes de fissuration critique sont des phénomènes macroscopiques de fissuration à déformations imposées.

Il est donc nécessaire de développer un matériau absorbant neutronique pouvant être utilisé dans ces deux types de réacteurs.

Ce matériau doit donc présenter en plus des caractéristiques précitées un module d'Young et un coefficient de dilatation thermique faibles, ainsi qu'une conductivité thermique, une ténacité, une résistance à la propagation des fissures et une résistance à l'endommagement élevées. Le document EP-A-0 359 683 décrit une pastille absorbeuse de neutrons et son procédé de fabrication. Il décrit un élément faiblement absorbant obtenu par moulage ou frittage d'un mélange de poudres céramiques (B₄C, HfO₂, Eu₂O₃) et métal (Hf, Eu, Ni, Cr)

Le document WO-A-94/28556 décrit un matériau absorbant neutronique et son procédé de préparation. Le matériau décrit est à base de carbure de bore et peut comprendre du hafnium, en particulier du diborure de hafnium. Le diborure de hafnium représente au plus 40% en volume, de préférence de 20 à 30% en volume.

### Exposé de l'invention

La présente invention a précisément pour but de pallier les inconvénients précités et de fournir un

procédé de fabrication d'un matériau absorbant neutronique, ledit matériau absorbant neutronique étant un matériau composite comprenant du carbure de bore et du diborure de hafnium. Le carbure de bore et le diborure de hafnium peuvent être les composants principaux du matériau selon l'invention.

Ce procédé comprend les étapes suivantes :
- ajouter à une poudre de carbure de bore une poudre de hafnium,
- mélanger la poudre de carbure de bore et la poudre de hafnium de manière à obtenir un mélange homogène, et
- fritter le mélange homogène obtenu à une pression de frittage et à une température suffisantes de manière à obtenir le matériau composite, caractérisé en ce que la pression de fittrage est appliqué avant que la température du mélange homogène des poudres ait atteint la température de réaction de frittage dudit mélange.

Selon l'invention, on peut ajouter jusqu'à 40% environ en volume de hafnium, le mélange homogène des poudres de carbure de bore et de hafnium représentent 100% en volume.

Selon le procédé de l'invention, on peut ajouter entre 15 et 40% en volume d'hafnium, par exemple entre 20 et 30% en volume de hafnium, par exemple environ 25% en volume de hafnium, le mélange homogène des poudres de carbure de bore et de hafnium repésentent 100% en volume. On peut aussi noter ici que le hafnium peut contenir une fraction massique de zirconium allant jusqu'à 4% en masse du hafnium, le zirconium pouvant notamment être une impureté présente classiquement dans le hafnium. Le mélange homogène, des poudre de carbure de bore et de hafnium, représente 100% en volume du mélange.

Selon le procédé de l'invention, la poudre de carbure de bore peut avoir de préférence une granulométrie allant jusqu'à 50 µm environ.

Selon le procédé de l'invention, la poudre de hafnium peut avoir de préférence une granulométrie allant jusqu'à 20 µm, de préférence encore allant jusqu'à 10 µm environ.

Selon le procédé de l'invention, le mélange de la poudre de carbure de bore et de la poudre de hafnium peut être réalisé par n'importe quel moyen connu de l'homme du métier pour obtenir un mélange homogène de telles poudres. De préférence, le mélange de ces poudres peut être réalisé par application simultanée d'une agitation mécanique et d'ultrasons ou d'une simple application d'ultrasons à une barbotine comprenant lesdites poudres dispersées dans un liquide de dispersion.

Le liquide de dispersion est de préférence un liquide qui après le mélange des poudres pourra être éliminé facilement par exemple par évaporation. Ce liquide de dispersion peut être par exemple un alcool tel que l'éthanol.

Lorsqu'un mélange homogène des poudres est obtenu, il peut être séché par exemple par évaporation de l'alcool puis il peut être tamisé afin d'éliminer d'éventuels agrégats de poudre dans le mélange.

Le mélange homogène obtenu est alors fritté pour obtenir le matériau composite.

Selon l'invention, le frittage peut être réalisé sous vide ou dans toute atmosphère constitué d'un gaz neutre, par exemple de préférence l'argon.

Selon l'invention, le mélange peut être fritté dans n'importe quel moule adéquat pour fritter de telles poudres, par exemple un moule en graphite de préférence chemisé par une feuille de graphite. Le chemisage du moule permet notamment d'éviter une diffusion d'espèces chimiques du mélange vers le moule et de faciliter le démoulage ultérieur du matériau composite.

Le moule peut avoir une forme adéquate pour un moulage du matériau sous forme de pastille, de plaque, de croix, de crayon et de manière générale, sous une forme appropriée pour constituer des barres de contrôle d'un réacteur nucléaire.

Le frittage du mélange est avantageusement réalisé dans des conditions de température, pression et durée qui permettent de densifier correctement le matériau composite, il peut par exemple être effectué à une température d'environ 1800 à 2100°C, par exemple à une température d'environ 2000°C, sous une pression de 70 à 110 MPa, par exemple de 90 à 100 MPa, par exemple d'environ 92 MPa, pendant une durée d'environ 15 à 90 minutes, par exemple d'environ 1 heure.

Le frittage peut être réalisé par exemple dans un four maintenu sous vide dynamique.

La pression pour le frittage est appliquée avant la réaction qui se produit dans le mélange des poudres carbure de bore et hafnium. Ainsi, la pression peut être appliquée avant que la température du mélange de poudre ait atteint la température de réaction de frittage dudit mélange, par exemple lorsque la température du mélange et du moule est d'environ 20 à 1200°C, par exemple d'environ 500 à 1000°C, par exemple encore d'environ 800°C.

Dans ces conditions, le frittage réactif dans le mélange des poudres, le contact thermique entre les poudres de carbure de bore et de hafnium, et la composition et la morphologie du matériau composite sont corrects. De plus, la densification du matériau composite de la présente invention est très satisfaisante.

Un premier avantage du matériau absorbant neutronique obtenu par le procédé de l'invention est qu'il présente une plus grande résistance vis-à-vis de la propagation des fissures.

Un autre avantage du matériau selon l'invention est qu'il conserve son intégrité géométrique malgré un endommagement mécanique majeur. En effet, le matériau composite selon l'invention ne se fragmente pas lorsqu'il subit un fort gradient thermique, un gonflement, une microfracturation ou une fissuration.

Un autre avantage selon l'invention a été mis en évidence par des essais de flexion biaxiale réalisés sur des disques échantillons du matériau carbure de bore pur. Ces essais ont montré un comportement en rupture purement fragile du carbure de bore pur menant à la fragmentation du matériau. Dans le cas du matériau composite selon l'invention, le comportement en rupture est pseudo-plastique et dissipatif ; et il ne conduit pas à la fragmentation du matériau composite selon l'invention qui reste après endommagement mécanique en une seule pièce même microfracturée ou fissurée. Ce résultat se traduit par un module d'Young du matériau composite de la présente invention inférieur à celui du carbure de bore pur, par un allongement à rupture du matériau composite de la présente invention supérieur à celui du carbure de bore pur, et par un module de Weibull du matériau composite de la présente invention supérieur à celui du carbure de bore pur et donc une moindre dispersion de la probabilité de rupture en fonction d'une contrainte donnée qui se produirait dans le matériau.

Un autre avantage selon l'invention a été mis en évidence par des essais comparatifs de double-torsion sur des plaques échantillons du matériau carbure de bore pur et sur un matériau selon l'invention. Ces essais ont montré pour le matériau en carbure de bore pur un comportement purement fragile en fissuration et une fissuration intragranulaire. Dans le cas du matériau composite selon l'invention, le comportement en fissuration montre des phénomènes de blocages répétés des fissures, des phénomènes de déflexion des fissures, et des phénomènes de pontage des fissures dans la structure composite du matériau selon l'invention. Il en résulte une résistance à la propagation des fissures et une ténacité du matériau composite de la présente invention supérieure à celle du carbure de bore pur. Ce résultat se traduit aussi par un effet de courbe R mis en évidence pour matériau composite de la présente invention grâce à l'essai de double-torsion.

Un autre avantage selon l'invention a été mis en évidence par des essais de fissuration sous gradient thermique sur des disques échantillons de carbure de bore pur et sur des disques du matériau de la présente invention. Ces essais montrent pour ce matériau un comportement purement fragile à la fissuration et une fissuration intragranulaire instantanée. En effet, le carbure de bore pur ne peut pas résister à un gradient thermique représentatif d'un gradient thermique qui se produit sous irradiation en réacteur à neutrons rapides. Ceci est dû aux contraintes thermo-mécaniques induites par le gradient thermique qui dépasse la résistance à la propagation des fissures du carbure de bore pur et provoque la fragmentation de l'échantillon de carbure de bore pur. Dans le cas du matériau composite de la présente invention, des fissures sont également apparues dans les disques échantillons mais elles sont bloquées grâce à la structure du matériau selon l'invention. Les disques échantillons du matériau composite de la présente invention se présentent encore en une seule pièce. Les fissures sont plus courtes car leur développement est bloqué par la présence des agglomérats de borure de hafnium qui a limité leur propagation. Ce résultat est l'effet d'une conductivité thermique, d'une résistance à la propagation des fissures, et d'une ténacité du matériau composite de la présente invention supérieures à celle du carbure de bore pur, ainsi que d'un effet de courbe R mis en évidence pour matériau composite de la présente invention grâce à l'essai de double-torsion.

Le matériau absorbant neutronique composite selon l'invention peut par exemple être décrit comme comprenant une matrice homogène de carbure de bore (B₄C), dans laquelle sont répartis de manière homogène des agglomérats comprenant du monoborure d'hafnium (HfB), diborure d'hafnium (HfB₂) et des traces de carbure d'hafnium (HfC). Des plages de carbone libre (C) peuvent être mises en évidence à l'interface entre la matrice et les agglomérats, de préférence, cette phase de carbone libre n'excède pas 10% en masse de la phase carbure de bore. Le hafnium introduit évolue donc vers des phases borures d'hafnium qui se présentent dans le composite sous forme d'agglomérats.

Le borure d'hafnium présente aussi l'avantage d'un comportement sous irradiation neutronique très satisfaisant et meilleur que le carbure de bore en terme d'accommodation concernant des déformations subies, de défauts d'irradiation et de microfracturation.

La nature des phases agglomérées au cours du frittage réactif peut donc être importante pour comprendre l'avantage du matériau composite selon la présente invention.

Les phases borures d'hafnium dans le composite selon la présente invention se présentent sous l'aspect d'agglomérats. Ces agglomérats dans le matériau composite selon l'invention apportent au matériau composite l'aptitude à résister à la propagation des fissures et à conserver son intégrité physique malgré l'abaissement lent et progressif de ses caractéristiques mécaniques.

D'autres caractéristiques et avantages apparaîtront encore à la lecture des exemples suivants donnés bien entendu à titre illustratif et non limitatif en référence aux figures en annexe.

### Description des figures

- la figure 1 est une représentation graphique de l'influence du cycle de frittage sur la température de frittage d'un mélange de poudres de B₄C et de Hf selon la présente invention,
- la figure 2 est une représentation graphique de comportement en rupture du carbure de bore pur et d'un matériau selon la présente invention dans le cas de l'exemple 1,
- la figure 3 est une représentation graphique du comportement en fissuration du carbure de bore pur et d'un matériau composite B₄C/Hf selon la présente invention dans le cas de l'exemple 1,
- la figure 4 est une représentation graphique de l'effet de courbe R observé pour un matériau composite B₄C/Hf selon la présente invention dans le cas de l'exemple 1.

### Exemple 1 : Fabrication d'un matériau composite selon l'invention

On a mélangé 18,9 g d'une poudre de carbure de bore ayant une granulométrie moyenne inférieure à 50 µm et 32,75 g de hafnium ayant une granulométrie moyenne inférieure à 20 µm, soit 75% en volume de carbure de bore et 25% en volume de hafnium.

Le mélange a été effectué de façon aussi homogène que possible par application d'ultrasons à une barbotine constituée des deux poudres dispersées dans de l'éthanol.

Le mélange a ensuite été séché dans une étuve chauffée à 80°C puis tamisé avec un tamis ayant des mailles de 60 microns. Une masse de 2,5 g du mélange a été introduite dans un moule en graphite de 9,5 mm de diamètre. Deux pistons en graphite bouchent les extrémités du moule préalablement chemisé par une feuille de graphite d'épaisseur 0,5 mm et permettant d'appliquer la pression sur la poudre.

L'ensemble mélange et moule a été porté à une température de 2000°C sous une pression de 92 MPa pendant une heure dans un four maintenu sous vide dynamique. La pression de 92 MPa a été appliquée lorsque la température de l'ensemble moule et mélange a atteint 800°C et a été maintenue pendant la durée de la montée en température et pendant la durée du palier d'une heure. On a obtenu des pastilles de 8,5 mm de diamètre et de 8,5 mm de hauteur après rectification par usinage à l'outil diamanté. Les pastilles représentaient une densité finale égale à 98% de la densité théorique, soit une masse volumique de 5060 kg/m³.

### Exemple 2 : Application d'une pression à basse température pour l'obtention du composite selon l'invention

Dans les mêmes conditions que celles de l'exemple 1, on a fritté différents mélanges de poudres de carbure de bore et de hafnium par différents cycles de frittage.

Le cycle de frittage peut être défini par un certain nombre de paramètres:
- la température de frittage : c'est la température maximale, atteinte au cours du frittage, choisie pour obtenir la densité, la composition et la morphologie du composite selon l'invention,
- le temps de frittage : c'est le temps durant lequel le mélange est maintenu à la température de frittage,
- la pression de frittage : c'est la pression qui est exercée sur le mélange pendant le temps de frittage,
- la température de mise sous pression du mélange : c'est la température à laquelle on applique la pression au mélange.

On a successivement, pour chacun de ces frittages, mesuré la densité du matériau composite obtenu et identifié par diffraction des rayons X la composition après frittage du composite.

Pour chaque mélange, on a calculé une densité relative (dr) en % du matériau composite obtenu après frittage, en calculant le rapport de la densité mesurée et de la densité théorique après frittage.

Le tableau 1 suivant regroupe les résultats de cet exemple.

**Tableau 1**

| Température de frittage en °C | | 1000 | 1200 | 1300 | 1400 | 1800 | 1900 | 2000 |
|---|---|---|---|---|---|---|---|---|
| Mise en pression à la température de frittage et pression de frittage de 60 MPa | dr en % | 58 | 60 | 61 | - | 67 | - | 70 |
| Mise en pression à la température de frittage et pression de frittage de 110 MPa | dr en % | - | 65 | - | 68 | - | 80 | 83 |
| Mise en pression à 800°C et pression de frittage de 92 MPa | dr en % | - | 68 | 69 | - | 85 | - | 99 |

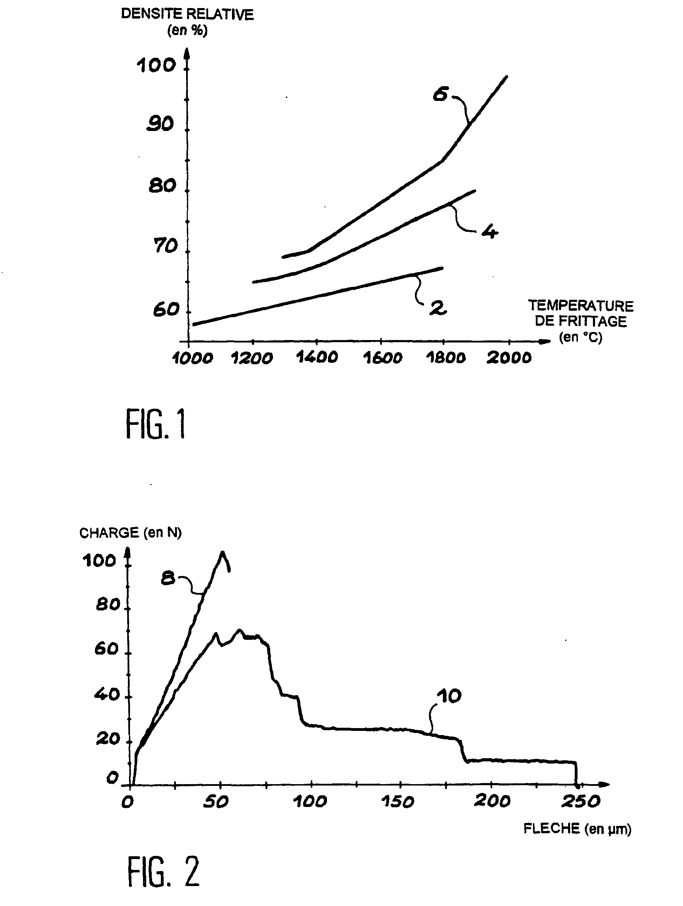

Sur la figure 1, on a reporté les valeurs du tableau 1 de manière à construire un graphique de densité relative en % du matériau composite en fonction de la température de frittage pour une mise en pression à la température de frittage et pour une pression de 60 MPa : courbe de référence 2, pour une mise en pression à la température de frittage et pour une pression de frittage de 110 MPa : courbe de référence 4 et enfin pour une mise en pression à basse température à 800°C et pour une pression de frittage de 92 MPa : courbe de référence 6.

Cette figure met en évidence l'influence des paramètres du cycle de frittage et de la température de frittage sur un mélange de carbure de bore et de hafnium selon l'invention.

Les résultats de cet exemple montrent de manière générale que la température de mise en pression du mélange peut être essentielle pour l'obtention du composite selon l'invention présentant des densités relatives qui varient entre 80 et 99% de la densité théorique du mélange de départ après frittage réactif.

Différents matériaux composites selon l'invention ont été analysés par diffraction des rayons X. Ces matériaux composites ont été obtenus avec une mise en pression à basse température et une pression de frittage de 92 MPa et pour des températures de frittage croissantes : 1000°C, 1200°C, 1400°C, 1800°C, 1900°C et 2000°C. L'analyse des spectres de diffraction des rayons x nous a permis de suivre l'évolution de la composition chimique du composite selon l'invention en fonction de la température de frittage. Cette analyse nous a permis d'identifier les différentes phases en présence dans le composite selon l'invention afin d'obtenir la composition chimique la plus favorable au meilleur comportement sous irradiation neutronique.

Les résultats sont résumés dans le tableau 2 suivant :

| Température de frittage en °c | Nature des phases en présence dans le matériau composite selon l'invention |
|---|---|
| 1000 | Carbure de bore B₄C |
| | Hafnium Hf |
| | Monoborure de hafnium HfB |
| | Carbure d'Hafnium HfC |
| | Diborure de hafnium HfB₂ |
| 1200 | Carbure de bore B₄C |
| | Hafnium Hf |
| | Diborure de hafnium HfB₂ |
| | Monoborure de hafnium HfB |
| | Carbure d'Hafnium HfC |
| | Carbone C |
| 1400 | Carbure de bore B₄C |
| | Diborure de hafnium HfB₂ |
| | Monoborure de hafnium HfB |
| | Hafnium Hf. |
| | Carbure d'Hafnium HfC |
| | Carbone C |
| 1800 | Carbure de bore B₄C |
| | Diborure de hafnium HfB₂ |
| | Monoborure de hafnium HfB |
| | Carbone C |
| | traces : Hafnium Hf |
| | traces : Carbure d'Hafnium HfC |
| 1900 | Carbure de bore B₄C |
| | Diborure de hafnium HfB₂ |
| | Carbone C |
| | traces : Monoborure de hafnium HfB |
| 2000 | Carbure de bore B₄C |
| | Diborure de hafnium HfB₂ |
| | Carbone C |

Ces résultats montrent de manière générale que, lorsque les conditions de contacts thermiques entre les deux phases carbure de bore et hafnium, au départ, dans le mélange initial des poudres sont celles conformes à la présente invention, il se produit au cours du frittage un ensemble de réactions chimiques impliquant l'évolution de la composition chimique du matériau selon l'invention.

Un autre effet du mode de frittage du matériau composite selon l'invention est la structure qui se forme au cours du frittage. Elle se présente sous la forme d'une matrice de carbure de bore et d'agglomérats d'une phase borure d'hafnium qui confère au matériau une meilleure conductivité thermique et un meilleur comportement en rupture et en fissuration décrits notamment dans les exemples 3 et 4 suivants.

### Exemple 3 : Evaluation de la résistance à l'endommagement mécanique d'un matériau composite selon l'invention

La contrainte à rupture est la grandeur macroscopique caractérisant la résistance à la rupture d'un matériau. Il s'agit de la valeur critique de la contrainte maximale calculée dans une éprouvette du matériau étudié. Cette contrainte à rupture dépend de défauts critiques ayant impliqué la rupture de la structure selon la théorie de Griffith.

L'allongement à rupture est la grandeur macroscopique qui représente l'allongement ou déformation d'une éprouvette lorsque la rupture de cette dernière se produit, c'est-à-dire lorsque la contrainte à rupture est atteinte.

Le module d'Young est la grandeur macroscopique caractérisant l'élasticité d'un matériau homogène et isotrope. Lors de la caractérisation d'un matériau, le module d'Young du matériau est le rapport de la contrainte calculée dans le matériau sur la déformation correspondante. Le module d'Young est également la pente de droite représentant l'évolution de la contrainte calculée dans un échantillon et la déformation correspondante mesurée.

Le test de flexion biaxiale choisi dans notre cas permet de tester en contraintes planes un matériau dont les éprouvettes ont la forme de disques de faible épaisseur (théorie des plaques minces). La charge est transmise par l'intermédiaire d'une bille centrale (contact ponctuel) sur la surface supérieure de l'éprouvette de matériau à tester. Cette configuration permet d'obtenir une zone axisymétrique de contraintes uniformes au centre de l'éprouvette de matériau à tester. Le support de l'éprouvette est réalisé par trois billes réparties sur un cercle dont le centre est placé dans le prolongement de la ligne de charge. Le test présente les avantages d'une préparation des éprouvettes simple et fiable, d'une faible dispersion expérimentale des mesures (réduction des effets de bords et zone de charge uniforme) et d'un test des matériaux en mode biaxial.

Ce test permet de mesurer la charge imposée à l'éprouvette et sa flèche au cours du test. Au cours de la mise en charge de l'éprouvette de flexion biaxiale, l'enregistrement continu de la variation de la flèche en fonction de la charge imposée permet d'évaluer le module d'Young tout au long du régime élastique. Lorsque la charge atteint la charge critique suffisante pour provoquer la rupture de l'éprouvette, cette charge critique permet de calculer la contrainte à rupture du matériau et la flèche permet de déterminer l'allongement ou la déformation à rupture (allongement ou déformation correspondante à l'instant de la rupture).

Le matériau en carbure de bore pur est purement élastique : le module d'Young est une constante qui suffit à décrire l'ensemble de la courbe représentant l'évolution de la contrainte en fonction de la déformation jusqu'au moment de la rupture, cette courbe est une simple droite continue et monotone pour ce matériau.

Il est également fragile : la rupture est instantanée et conduit à l'effondrement de toutes les caractéristiques du matériau (module d'Young et contrainte à rupture), il n'est plus possible d'imposer une charge à ce dernier puisqu'il ne présente plus aucune tenue mécanique. La courbe représentant l'évolution de la flèche en fonction de la charge (ou de la charge en fonction de la flèche) est une droite continue monotone qui s'interrompt brutalement à l'instant de la rupture de l'éprouvette. L'énergie élastique stockée au cours de la mise en charge de l'éprouvette est restituée brutalement à la rupture et se traduit par la fragmentation de l'éprouvette.

En revanche, le comportement du matériau de la présente invention est pseudo-plastique : le module d'Young ne suffit plus à décrire l'ensemble de la courbe représentant l'évolution de la contrainte en fonction de la déformation qui n'est pas une simple droite.

De plus, il est dissipatif : malgré l'endommagement qui se produit dans le matériau de la présente invention, il est encore possible d'imposer une charge à l'éprouvette qui conserve une tenue mécanique. L'énergie élastique stockée est graduellement dissipée par l'apparition de dommages dans l'éprouvette. La courbe représentant l'évolution de la charge en fonction de la flèche n'est pas une simple droite monotone qui s'interrompt brutalement, mais elle présente une lente et progressive décroissance de la charge en fonction de la flèche. Ce comportement traduit une lente et progressive décroissance de la tenue mécanique du matériau, et une décroissance progressive des caractéristiques mécaniques du matériau : module d'Young et contrainte à rupture. En outre la rupture du matériau composite selon la présente invention n'implique plus la fragmentation de ce dernier qui reste en une seule pièce démontrant un comportant cohésif.

Le tableau 3 suivant regroupe les caractéristiques mécaniques obtenues par flexion biaxiale pour une même géométrie d'éprouvette pour le carbure de bore pur et pour le matériau selon la présente invention dans le cas de l'exemple 1, et le tableau 4 suivant regroupe les résultats d'essais de flexion biaxiale pour le carbure de bore pur et pour le matériau de la présente invention.

**Tableau 3 : Caractéristiques mécaniques du matériau**

| | Module d'Young 10⁹ Pa | Contrainte à rupture 10⁶ Pa | Allongement à rupture 10⁶ Pa |
|---|---|---|---|
| B₄C | 360 | 400 | 50 |
| B₄C+25% vHf (exemple 1 | 250 | 200 | 250 |

Sur la figure 2, on a reporté les résultats obtenus de manière à représenter l'évolution de la charge imposée à l'éprouvette en Newtons en fonction de la flèche correspondante exprimée en microns jusqu'à la ruine complète du matériau testé pour le carbure de bore pur : courbe référencée 8, et pour le matériau selon la présente invention : courbe référencée 10. Cette figure met en évidence la différence de comportement en rupture entre le carbure de bore pur et le matériau selon la présente invention.

La courbe 8 présente notamment le comportement purement fragile du carbure de bore pur. La courbe 10 présente le comportement pseudo-plastique et dissipatif du composite B₄C/Hf selon la présente intention.

L'abaissement du module d'Young permet d'abaisser les contraintes subies par le matériau à déformations imposées et donc de solliciter moins le matériau dans le cas des dégradation exposées dans le paragraphe de l'art antérieur.

L'abaissement de la contrainte à rupture permet de stocker moins d'énergie élastique lors du fonctionnement normal du matériau avant une rupture et donc l'apparition prématurée de microfissures non critiques permet de dissiper progressivement cette énergie mécanique sans provoquer la fragmentation du matériau.

L'augmentation importante de l'allongement à rupture du matériau composite selon la présente invention est une conséquence des deux premières modifications des propriétés mécaniques du matériau. En effet, le matériau composite peut se dégrader lentement et progressivement en conservant une intégrité mécanique très convenable. En conséquence, le matériau composite selon l'invention peut se déformer jusqu'à dix fois plus environ qu'un matériau de l'art antérieur avant de ne plus présenter de tenue mécanique. Même à ce stade de dégradation sévère, le matériau composite selon l'invention ne présentant plus de tenue mécanique demeure en une seule pièce sans se fragmenter.

Le composite B₄C/Hf selon l'invention montre donc un meilleur comportement en rupture que le carbure de bore pur.

### Exemple 4 : Evaluation de la résistance à la propagation des fissures dans un matériau selon l'invention

La ténacité est la grandeur macroscopique caractérisant la résistance à la propagation des fissures dans un matériau. Il s'agit de la valeur critique du facteur d'intensité de contraintes calculé au niveau d'une préfissure introduite dans le matériau étudié. Cette préfissure crée un défaut critique de taille très supérieure à celle de tous les autres défauts existant naturellement dans l'éprouvette.

L'essai de double-torsion choisi dans notre cas consiste à pratiquer une entaille de 3 mm dans une plaque rectangulaire (longueur 35 mm x largeur 17 mm x épaisseur 2 mm) et d'affiner la pointe de cette entaille par des indentations Knoop successives selon l'axe médian le long de l'éprouvette. Les caractéristiques du défaut ainsi créé doivent être aussi proches que possible de celles d'un défaut naturel, et en particulier, le rayon de courbure en fond d'entaille doit être très faible. La fissure s'amorce sous le point d'application de la charge à partir de la préfissure et se propage le long de l'axe de l'éprouvette.

L'essai consiste alors à mettre en flexion trois points à l'extrémité de la plaque, à procéder à l'ouverture de la fissure pour provoquer sa propagation en contrôlant la contrainte imposée et en enregistrant le déplacement sous l'extrémité de l'entaille. La plaque est en appui sur quatre appuis ponctuels et la charge est transmise par un appui également ponctuel à l'extrémité de la préfissure.

La procédure de l'essai consiste à imposer à l'éprouvette une flèche qui croît à vitesse constante (5 µm/min).

La mesure de la charge critique Pc provoquant la propagation de la fissure permet donc alors de calculer la ténacité.

Lorsque le matériau le permet, il peut se produire au cours de la propagation de la fissure des blocages après que cette dernière ait commencé à se développer, c'est-à-dire lorsque la ténacité précédemment définie a été dépassée dans un point du matériau.

Lorsque le matériau le permet également, il peut se produire des phénomènes locaux de renforcement vis-à-vis de la propagation de la fissure. Ces phénomènes se traduisent par une augmentation de la ténacité apparente en fonction de la position de l'extrémité de la fissure au moment où cette dernière va de nouveau se développer lorsque la ténacité locale aura été dépassée. On peut donc reconstituer grâce à l'essai de double-torsion défini précédemment un graphique représentant l'évolution de la ténacité apparente calculée pour chaque redémarrage successif de la fissure en fonction de la longueur de cette dernière qui se développe dans l'éprouvette de double torsion.

L'effet impliquant une augmentation de la ténacité apparente en fonction de la longueur de la fissure se développant dans le matériau est nommé effet de courbe R, c'est-à-dire donc l'aptitude du matériau à résister à la propagation des fissures à mesure que ces dernières se propagent. Cet effet de courbe R peut être mis en évidence par le graphique décrit précédemment représentant l'évolution de la ténacité en fonction de la longueur de la fissure.

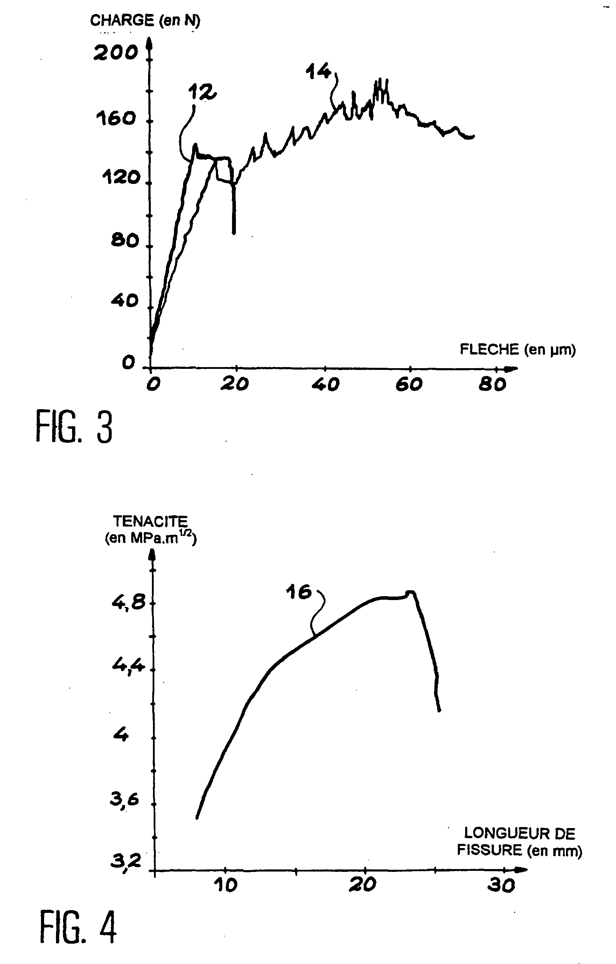

Sur la figure 3, on a reporté les courbes obtenues lors d'essais de double torsion de manière à représenter l'évolution de la charge imposée à l'éprouvette en Newtons en fonction de la flèche correspondante exprimée en microns jusqu'à la propagation totale de la fissure dans le matériau testé pour le carbure de bore pur : courbe référencée 12, et pour le matériau selon la présente invention : courbe référencée 14. Cette figure met en évidence la différence de comportement en fissuration entre le carbure de bore pur et le matériau selon la présente invention.

Notamment, la courbe 14 met en évidence les phénomènes successifs de blocage de la fissure traduisant des renforcements locaux dans le composite B₄C/Hf selon la présente invention. Après un blocage de la fissure qui se traduit par une relaxation de la charge imposée, pour que la propagation de la fissure se poursuive, il faut que la charge imposée soit accrue pour provoquer un nouveau développement de la fissure.

La courbe 12 traduit la fissuration instantanée du matériau en carbure de bore pur sans phénomènes de renforcement.

Sur la figure 4, on a reporté la courbe, référencée 16, représentant l'évolution de la ténacité apparente du matériau composite selon l'invention en fonction de la longueur de la fissure qui se propage dans une éprouvette de double torsion. Cette courbe en forme de cloche est la démonstration de l'effet de courbe R qui existe dans le comportement en fissuration du matériau composite B₄C/Hf selon la présente invention.

L'augmentation de la résistance à la propagation des fissures du matériau composite selon l'invention est de l'ordre de 40% (augmentation de la résistance à la propagation des fissures de 3,5 à 4,9 Mpa.m^{1/2}) lorsque la fissure se propage entre le ¼ et les ¾ de la longueur de l'éprouvette. Lorsque la longueur de la fissure est trop importante par rapport à la longueur de l'éprouvette de double torsion (34 mm), la résistance à la propagation des fissures diminue. Cette diminution correspond à la ruine finale du matériau.

Le tableau suivant est une représentation discrétisée de la courbe 16 reportée à la figure 4.

**Tableau 4**

| Longueur de la fissure en mm | Ténacité apparente en Mpa.m^{1/2} |
|---|---|
| 8,0 | 3,5 |
| 9,0 | 3,7 |
| 12,2 | 4,3 |
| 13,9 | 4,4 |
| 17,5 | 4,6 |
| 20,7 | 4,8 |
| 23,0 | 4,8 |
| 23,2 | 4,9 |
| 23,7 | 4,9 |
| 25,2 | 4,4 |
| 25,2 | 4,3 |
| 25,5 | 4,1 |

Une analyse micrographique permet de mettre en évidence la différence de comportement en rupture et en fissuration du carbure de bore pur d'une part, et du matériau composite selon l'invention d'autre part.

Notamment, elle montre la fragmentation du carbure de bore pur, alors que malgré la propagation de fissures dans le matériau composite de la présente invention, ce dernier reste en une seule pièce et n'est pas fragmenté.

Le tableau 5 suivant présente les mesures par essai de double torsion de la ténacité du carbure de bore pur et du matériau composite B₄C/Hf selon l'invention dans le cas de l'exemple 1.

**Tableau 5 : Ténacité des matériaux**

| Matériaux | Ténacité KIC 10⁶ Pa.m^{0,5} |
|---|---|
| Carbure de bore B₄C | 3,5 |
| Composite B₄C/Hf | 5,0 |

Le composite B₄C/Hf selon l'invention présente une résistance à la propagation des fissures qui augmente à mesure que les fissures se propagent. Le comportement en fissuration du composite B₄C/Hf selon l'invention présente donc un effet de courbe R.

Le composite B₄C/Hf selon l'invention présente une ténacité supérieure à la ténacité du carbure de bore pur.

Le composite B₄C/Hf selon l'invention montre donc un meilleur comportement en fissuration que le carbure de bore pur.

## Revendications

1. Procédé de fabrication d'un matériau absorbant neutronique, ledit matériau étant un matériau composite comprenant du carbure de bore et du hafnium, comprenant les étapes suivantes :
- ajouter à une poudre de carbure de bore, une poudre de hafnium,
- mélanger la poudre de carbure de bore et la poudre de hafnium de manière à obtenir un mélange homogène, et
- fritter le mélange homogène à une pression de frittage et à une température suffisantes de manière à obtenir le matériau composite,
**caractérisé en ce que** la pression de frittage est appliquée avant que la température du mélange homogène des poudres ait atteint la température de réaction de frittage dudit mélange.

2. Procédé selon la revendication 1, dans lequel on ajoute jusqu'à 40% environ en volume de hafnium, le mélange homogène des poudres de carbure de bore et de hafnium représentant 100% en volume.

3. Procédé selon la revendication 1, dans lequel on ajoute 25% environ en volume de hafnium, le mélange homogène des poudres de carbure de bore et de hafnium représentant 100% en volume.

4. Procédé selon l'une quelconque des revendications 1 à 3, dans lequel la poudre de carbure de bore a une granulométrie allant jusqu'à 50 µm environ.

5. Procédé selon l'une quelconque des revendications 1 à 4, dans lequel la poudre de hafnium a une granulométrie allant jusqu'à 20 µm environ.

6. Procédé selon l'une quelconque des revendications 1 à 4, dans lequel la poudre de hafnium a une granulométrie allant jusqu'à 10 µm environ.

7. Procédé selon la revendication 1, dans lequel le mélange de la poudre de carbure de bore et de hafnium est réalisé par application d'ultrasons à une barbotine comprenant lesdites poudres dispersées dans un liquide de dispersion.

8. Procédé selon la revendication 1 dans lequel le mélange homogène est fritté sous vide ou dans une atmosphère constituée d'un gaz neutre.

9. Procédé selon la revendication 1 ou 6, dans lequel le mélange homogène est fritté dans un moule en graphite chemisé par une feuille de graphite.

10. Procédé selon l'une quelconque des revendications précédentes, dans lequel le mélange est fritté à une température de 1800°C à 2100°C environ, sous une pression de 70 à 110 MPa environ pendant une durée de 15 à 90 minutes environ.

11. Procédé selon l'une quelconque des revendications précédentes, dans lequel le mélange est fritté à une température d'environ 2000°C, sous une pression d'environ 92 MPa pendant une durée d'environ 1 heure.

12. Matériau absorbant neutronique comprenant du carbure de bore et du diborure de hafnium obtenu par un procédé selon l'une quelconque des revendications 1 à 11.

## Patentansprüche

1. Verfahren zur Erzeugung eines borkarbid - und hafniumhaltigen neutronenabsorbierenden Verbundmaterials, das die folgenden Schritte umfasst:
- einem Borkarbidpulver ein Hafniumpulver beimengen,
- das Borkarbidpulver und das Hafniumpulver derartig mischen, dass man eine homogene Mischung erhält, und
- Sintern der homogenen Mischung mit einem Sinterungsdruck und einer Temperatur, die ausreichen, um das Verbundmaterial zu erhalten,
**dadurch gekennzeichnet, dass** der Sinterungsdruck angewendet wird, bevor die Temperatur der homogenen Pulvermischung die Sinterungsreaktionstemperatur der genannten Mischung erreicht.

2. Verfahren nach Anspruch 1, bei dem man bis zu ungefähr 40 Vol% Hafnium beimengt, wobei die homogene Mischung aus Borkarbid- und Hafniumpulver 100 Vol% darstellt.

3. Verfahren nach Anspruch 1, bei dem man ungefähr 25 Vol% Hafnium beimengt, wobei die homogene Mischung aus Borkarbid- und Hafniumpulver 100 Vol% darstellt.

4. Verfahren nach einem der Ansprüche 1 bis 3, bei dem das Borkarbidpulver eine bis ungefähr 50 µm gehende Teilchengröße hat.

5. Verfahren nach einem der Ansprüche 1 bis 4, bei dem das Hafniumpulver eine bis ungefähr 20 µm gehende Teilchengröße hat.

6. Verfahren nach einem der Ansprüche 1 bis 4, bei dem das Hafniumpulver eine bis ungefähr 10 µm gehende Teilchengröße hat.

7. Verfahren nach Anspruch 1, bei dem die Mischung aus Borkarbidpulver und Hafniumpulver durch Anwendung von Ultraschallwellen auf einen Brei bzw. Schlicker realisiert wird, der die genannten Pulver enthält, feinst verteilt in einer Dispersionsflüssigkeit.

8. Verfahren nach Anspruch 1, bei dem die homogene Mischung unter Vakuum oder in einer Atmosphäre aus neutralem Gas gesintert wird.

9. Verfahren nach Anspruch 1 oder 6, bei dem die homogene Mischung in einer mit einer Graphitfolie ausgekleideten Graphitform gesintert wird.

10. Verfahren nach einem der vorangehenden Ansprüche, bei dem die Mischung mit einer Temperatur von ungefähr 1800°C bis 2100°C und einem Druck von ungefähr 70 bis 110 Mpa während einer Dauer von ungefähr 15 bis 90 Minuten gesintert wird.

11. Verfahren nach einem der vorangehenden Ansprüche, bei dem die Mischung mit einer Temperatur von ungefähr 2000°C und einem Druck von ungefähr 92 Mpa während einer Dauer von ungefähr 1 Stunde gesintert wird.

12. Neutronenabsorbierendes Material, Borkarbid und Hafnium-Diborid umfassend, erzeugt durch ein Verfahren nach einem der Ansprüche 1 bis 11.

## Claims

1. Process for manufacturing a neutron absorbent material, said material being a composite material containing boron carbide and hafnium, comprising the following steps:
- adding hafnium powder to a powder of boron carbide,
- mixing the boron carbide powder and the hafnium powder such as to obtain a homogeneous mixture, and
- sintering the homogeneous mixture at a sufficient sintering pressure and temperature to obtain a composite material,
**characterized in that** the sintering pressure is applied before the temperature of the homogeneous mixture of the powders reaches the sintering reaction temperature of said mixture.

2. Process according to claim 1, in which up to approximately 40% by volume of hafnium is added, the homogeneous mixture of the boron carbide and hafnium powders representing 100% by volume.

3. Process according to claim 1, in which approximately 25% by volume of hafnium is added, the homogeneous mixture of the boron carbide and hafnium powders representing 100% by volume.

4. Process according to any of claims 1 to 3, in which the grain size of the boron carbide powder ranges up to approximately 50 µm.

5. Process according to any of claims 1 to 4, in which the grain size of the hafnium powder ranges up to approximately 20 µm.

6. Process according to any of claims 1 to 4, in which the grain size of the hafnium powder ranges up to approximately 10 µm.

7. Process according to claim 1, in which the mixture of boron carbide and hafnium powders is made by applying ultrasound to a paste containing said powders dispersed in a dispersion liquid.

8. Process according to claim 1, in which the homogeneous mixture is sintered in a vacuum or in an atmosphere formed of a neutral gas.

9. Process according to claim 1 or 6, in which the homogeneous mixture is sintered in a graphite mould lined with a graphite sheet.

10. Process according to any of the preceding claims, in which the mixture is sintered at a temperature of approximately 1800°C to 2100°C, at a pressure of around 70 to 110 MPa for a period of approximately 15 to 90 minutes.

11. Process according to any of the preceding claims, in which the mixture is sintered at a temperature of approximately 2000°C at a pressure of around 92 MPa for a period of approximately 1 hour.

12. Neutron absorbing material comprising boron carbide and hafnium diboride obtained by a process according to any one of the claims 1 to 11.
